(19) Europäisches Patentamt
European Patent Office
Office européen des brevets

(11) Veröffentlichungsnummer : **0 018 634**
**B1**

(12) # EUROPÄISCHE PATENTSCHRIFT

(45) Veröffentlichungstag der Patentschrift : **28.04.82**

(51) Int. Cl.³ : **C 08 K 9/04**, C 08 L 83/04

(21) Anmeldenummer : **80102345.8**

(22) Anmeldetag : **30.04.80**

(54) **Zu Elastomeren vernetzbare Massen.**

(30) Priorität : **02.05.79 DE 2917727**

(43) Veröffentlichungstag der Anmeldung : **12.11.80 (Patentblatt 80/23)**

(45) Bekanntmachung des Hinweises auf die Patenterteilung : **28.04.82 Patentblatt 82/17**

(84) Benannte Vertragsstaaten :
**AT BE CH DE FR GB IT LI NL SE**

(56) Entgegenhaltungen :
**EP - A - 0 007 190**
**DE - A - 2 523 434**
**FR - A - 2 072 373**
**FR - A - 2 124 800**
**FR - A - 2 240 903**
**JP - A - 5 469 163**
**US - A - 2 780 611**
**US - A - 3 592 834**
**US - A - 3 946 061**

(73) Patentinhaber : **WACKER-CHEMIE GMBH**
**Prinzregentenstrasse 22**
**D-8000 München 22 (DE)**

(72) Erfinder : **Kratel, Günter, Dr. Dipl.-Chem.**
**Alpenblickstrasse 10**
**D-8961 Durach-Bechen (DE)**
Erfinder : **Stohr, Günter, Dr. Dipl.-Chem.**
**Stulbenstrasse 14**
**D-8961 Durach-Bechen (DE)**
Erfinder : **Scherer, Heinz**
**Mautnerstrasse 257**
**D-8263 Burghausen (DE)**

**EP 0 018 634 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Zu Elastomeren vernetzbare Massen

Unter Ausschluß von Wasser lagerfähige, bei Zutritt von Wasser bei Raumtemperatur zu Elastomeren vernetzende Massen aus kondensationsfähige Endgruppen aufweisendem Diorganopolysiloxan, mindestens drei an Silicium gebundene hydrolysierbare Gruppen aufweisender Siliciumverbindung und modifiziertem anorganischem Füllstoff mit einer Oberfläche von mindestens 50 $m^2/g$ sind bekannt. Hierzu sei z.B. auf US-PS 38 68 345 (ausgegeben : 25. Februar 1975, G. Kratel et al., Elektroschmelzwerk Kempten GmbH), wobei dieser US-PS die FR-PS 22 43 220 entspricht, verwiesen. Gemäß diesen vorstehend genannten Druckschriften handelt es sich bei dem modifizierten anorganischen Füllstoff um Siliciumdioxyd mit einer Oberfläche von mindestens 50 $m^2/g$, auf der sich Organosilylgruppen befinden. Gegenüber derartigen bekannten Massen haben die erfindungsgemäßen Massen z.B. den Vorteil, daß die daraus hergestellten Elastomeren auf Unterlagen, auf denen sie erzeugt wurden, besser haften und/oder daß sie höhere Bruchfestigkeit haben.

Gemäß einem am 3. August 1979 veröffentlichten Referat von JP-A-54 69 163 wird Siliciumdioxyd, das eine Oberfläche von 5 bis 500 $m^2/g$ aufweist und dessen Oberfläche mit einer polymerisierbaren Säure, wie Acrylsäure umgesetzt und bedeckt ist, als Füllstoff in Organopolysiloxanelastomeren verwendet. Die Füllstoffe in den erfindungsgemäßen Massen sind dagegen mit nicht-sauren Monomeren behandelt.

Gegenstand der Erfindung sind unter Ausschluß von Wasser lagerfähige, bei Zutrit von Wasser bei Raumtemperatur zu Elastomeren vernetzende Massen aus kondensationsfähige Endgruppen aufweisendem Diorganopolysiloxan, mindestens drei an Silicium gebundene hydrolysierbare Gruppen aufweisender Siliciumverbindung und modifiziertem anorganischem Füllstoff mit einer Oberfläche von mindestens 20 $m^2/g$ wobei mindestens ein Teil dieses Füllstoffs ein solcher ist, auf dessen Oberfläche mindestens eine Verbindung der allgemeinen Formel

$$HR^1C = CHX,$$

worin X die Gruppe —CN oder eine Gruppe der Formel —$COOR^2$, wobei $R^2$ ein Alkylrest mit 1 bis 4 Kohlenstoffatomen ist, und $R^1$ Wasserstoff oder die Methylgruppe bedeutet, oder ein Gemisch aus mindestens einer derartigen Verbindung und mindestens einem damit mischpolymerisierbaren anderen Monomer polymerisiert wurde.

Gemäß US-PS 34 97 570 (ausgegeben : 24. Februar 1970, K. B. Yerrick, Dow Corning Corporation) wird Polyacrylnitrilpulver in Mengen von 1,0 bis 15 Gewichtsprozent, bezogen auf das Gewicht von Diorganopolysiloxan, zur Verbesserung der Wärmebeständigkeit von Organopolysiloxanelastomeren, darunter auch solchen, die durch Einwirkung von Feuchtigkeit auf in den endständigen Einheiten Acyloxygruppen enthaltenden Diorganopolysiloxanen erzeugt werden, eingesetzt. Es ist bisher jedoch noch nicht bekannt geworden, daß solche Elastomeren auf Unterlagen, auf denen sie erzeugt werden, besonders gut haften.

Als kondensationsfähige Endgruppen aufweisende Diorganopolysiloxane können auch im Rahmen der Erfindung die gleichen Diorganopolysiloxane verwendet werden, die bisher zur Herstellung von unter Ausschluß von Wasser lagerfähigen, bei Zutritt von Wasser bei Raumtemperatur zu Elastomeren vernetzenden Massen aus kondensationsfähige Endgruppen aufweisendem Diorganopolysiloxan und mindestens drei an Silicium gebundene, hydrolysierbare Gruppen aufweisender Siliciumverbindung verwendet konnten. Die zur Herstellung solcher Massen meist verwendeten und auch im Rahmen der Erfindung bevorzugt verwendeten, kondensationsfähige Endgruppen aufweisenden Diorganopolysiloxane können z.B. durch die allgemeine Formel

$$HO(SiR_2O)_xSiR_2OH$$

wiedergegeben werden. In dieser Formel bedeutet R gleiche oder verschiedene, einwertige, gegebenenfalls substituierte Kohlenwasserstoffreste und x ist eine ganze Zahl im Vert von mindestens 10.

Innerhalb der bzw. entlang den Siloxanketten der vorstehend angegebenen Formel können, was bei derartigen Formeln üblicherweise nicht dargestellt wird, zusätzlich zu den Diorganosiloxaneinheiten ($SiR_2O$) noch andere Siloxaneinheiten vorliegen. Beispiele für solche anderen, meist lediglich als Verunreinigungen vorliegenden Siloxaneinheiten sind solche der Formeln $RSiO_{3/2}$, $R_3SiO_{1/2}$ und $SiO_{4/2}$, wobei R jeweils die oben dafür angegebene Bedeutung hat. Die Menge an solchen anderen Siloxaneinheiten als Diorganosiloxaneinheiten beträgt jedoch vorzugsweise höchstens 10 Molprozent, insbesondere höchstens 1 Molprozent, jeweils bezogen auf das Gewicht der kondensationsfähige Endgruppen aufweisenden Diorganopolysiloxane. Die Hydroxylgruppen in der oben angegebenen Formel von kondensationsfähige Endgruppen aufweisendem Diorganopolysiloxan können, falls erwünscht, vollständig oder teilweise durch andere kondensationsfähige Gruppen als Sigebundene Hydroxylgruppen ersetzt sein. Solche anderen kondensationsfähigen Gruppen sind insbesondere Alkoxygruppen mit 1 bis 5 Kohlenstoffatomen und Alkoxyalkylenoxygruppen mit 1 bis 5 Kohlenstoffatomen, wie der Methoxyäthylenoxyrest, sowie die hydrolysierbaren Gruppen in den weiter unten näher erläuterten, mindestens drei an Silicium gebundene, hydrolysierbare Gruppen aufweisenden Siliciumverbindungen. Dabei

sei in diesem Zusammenhang darauf hingewiesen, daß, wenn die kondensationsfähigen Gruppen im Diorganopolysiloxan mit kondensationsfähigen Endgruppen hydrolysierbare Gruppen sind, diese hydrolysierbaren Gruppen keineswegs die gleichen Gruppen sein müssen wie die hydrolysierbaren Gruppen in jeweils eingesetzter, mindestens drei an Silicium gebundene, hydrolysierbare Gruppen aufweisender Siliciumverbindung, die vom Fachmann in allgemeinen als « Vernetzer » bezeichnet wird.

Beispiele für Kohlenwasserstoffreste R sind Alkylreste, wie der Methyl-, Äthyl-, n-Propyl- und Isopropylrest sowie Octadecylreste ; Alkenylreste, wie der Vinyl- und Allylrest ; cycloaliphatische Kohlenwasserstoffreste, wie der Cyclopentyl- und Cyclohexylrest sowie Methylcyclohexyl- und Cyclohexenylreste ; Arylreste, wie der Phenylrest und Xenylreste ; Aralkylreste, wie der Benzyl-, beta-Phenyläthyl- und der beta-Phenylpropylrest ; sowie Alkarylreste, wie Tolylreste.

Als substituierte Kohlenwasserstoffreste R sind Halogenarylreste, wie Chlorphenyl- und Bromphenylreste ; sowie Cyanalkylreste, wie der beta-Cyanäthylrest, bevorzugt.

Insbesondere wegen der leichteren Zugänglichkeit sind vorzugsweise mindestens 50 %, insbesondere mindestens 90 %, der Anzahl der SiC-gebundenen Reste im kondensationsfähige Endgruppen aufweisenden Diorganopolysiloxan und damit der Reste R in den oben angegebenen Formeln Methylreste.

Bei dem Kondensationsfähige Endgruppen aufweisenden Diorganopolysiloxan kann es sich um Homo- oder Mischpolmerisate handeln. Es können Gemische aus verschiedenen, kondensationsfähige Endgruppen aufweisenden Diorganopolysiloxanen verwendet werden.

Die Viskosität der kondensationsfähige Endgruppen aufweisenden Diorganopolysiloxane beträgt vorzugsweise 100 bis 5 000 000 mPa.s bei 25 °C.

Bei der Bereitung der erfindungsgemäßen Massen können als mindestens drei an Silicium gebundene, hydrolysierbare Gruppen aufweisende Siliciumverbindungen ebenfalls die gleichen mindestens drei an Silicium gebundene, hydrolysierbare Gruppen aufweisenden Siliciumverbindungen verwendet werden, die auch bisher zur Herstellung von unter Ausschluß von Wasser lagerfähigen, bei Zutritt von Wasser bei Raumtemperatur zu Elastomeren vernetzenden Massen durch Vermischen von mindestens einer derartigen Siliciumverbindung mit kondensationsfähige Endgruppen aufweisendem Diorganopolysiloxan verwendet werden konnten.

Beispiele für im Rahmen der Erfindung verwendbare, mindestens drei an Silicium gebundene, hydrolysierbare Gruppen aufweisende Siliciumverbindungen sind somit Silane der allgemeinen Formel

$$R_aSiZ_{4-a},$$

worin R die oben dafür angegebene Bedeutung hat, Z eine hydrolysierbare Gruppe und a 0 oder 1 ist, und deren 2 bis 15 Siliciumatome je Molekül aufweisende Teilhydrolysate.

Beispiele für hydrolysierbare Gruppen Z sind Acyloxygruppen (—OOCR'), gegebenenfalls substituierte Kohlenwasserstoffoxygruppen (—OR'), Kohlenwasserstoffoxykohlenwasserstoffoxygruppen (—OR'), Kohlenwasserstoffoxykohlenwasserstoffoxygruppen (—OR''OR', wobei R'' ein zweiwertiger Kohlenwasserstoffrest, z.B. der $—CH_2CH_2—$Rest, ist), Aminoxygruppen ($—ONR_2'$), Aminogruppen (z.B. $—NR_2'$), Acylaminogruppen (z.B. —NR'COR'), Oximgruppen (z.B. $—ON—CR_2'$) und Phosphatgruppen [$—OOP(OR')_2$]. In diesen Formeln bedeutet R' gleiche oder verschiedene, einwertige, gegebenenfalls substituierte Kohlenwasserstoffreste. Der Fachmann weiß aber auch, daß zumindest bei manchen der vorstehend angegebenen Formeln mindestens ein R' Wasserstoff sein kann. Die Beispiele für Kohlenwasserreste R gelten auch für Kohlenwasserstoffreste R', und die Beispiele für substituierte Kohlenwasserstoffreste R gelten auch für substituierte Kohlenwasserstoffreste R'.

Beispiele für Acyloxygruppen sind insbesondere solche mit 1 bis 18 Kohlenstoffatomen, wie Formyloxy-, Acetoxy-, Propionyloxy-, Valeroyloxy-, Caproyloxy-, Myristyloxy- und Stearoyloxygruppen, wobei Acetoxygruppen besonders bevorzugt sind.

Beispiele für Kohlenwasserstoffoxygruppen sind insbesondere Alkoxygruppen mit 1 bis 10 Kohlenstoffatomen, wie Methoxy-, Äthoxy-, n-Propoxy-, Isopropoxy-, Butoxy-, Hexyloxy-, Heptyloxy- und Octyloxygruppen sowie andere Kohlenwasserstoffoxygruppen mit 1 bis 10 Kohlenstoffatomen, wie Vinyloxy-, Alkyloxy-, Äthylallyloxy-, Isopropenyloxy-, Butadienyloxy- und Phenoxygruppen.

Ein Beispiel für eine Kohlenwasserstoffoxykohlenwasserstoffoxygruppe ist die Methoxyäthylenoxygruppe.

Beispiele für Aminoxygruppen sind Dimethylaminoxy-, Diäthylaminoxy-, Dipropylaminoxy-, Dibutylaminoxy-, Dioctylaminoxy-, Diphenylaminoxy-, Äthylmethylaminoxy- und Methylphenylaminoxygruppen.

Beispiele für Aminogruppen sind n-Butylamino-, sec.-Butylamino- und Cyclohexylaminogruppen.

Ein Beispiel für eine Acylaminogruppe ist die Benzoylmethylaminogruppe.

Beispiele für Oximgruppen sind Acetaldoxim-, Acetophenonoxim-, Acetonoxim-, Benzophenonoxim-, 2-Butanonoxim-, Diisopropylketoxin- und Chlorcyclohexanonoximgruppen.

Beispiele für Oximgruppen sind Acetaldoxim-, Acetophenonoxim-, Acetonoxim-, Benzophenonoxim-, 2-Butanonoxim-, Diisopropylketoxim- und Chlorcyclohexanonoximgruppen.

Die mindestens drei an Silicium gebundene, hydrolysierbare Gruppen aufweisende Siliciumverbindung wird vorzugsweise in Mengen von 0,5 bis 15 Gewichtsprozent, bezogen auf das Gewicht von kondensationsfähige Endgruppen aufweisendem Diorganopolysiloxan, eingesetzt.

Beispiele für anorganische Füllstoffe mit einer Oberfläche von mindestens 20 $m^2/g$, die für die Herstellung der erfindungsgemäß verwendeten, modifizierten Füllstoffe eingesetzt werden können, sind pyrogen erzeugte Siliciumdioxyde, unter Erhaltung der Struktur entwässerte Kieselsäure-Hydrogele und andere Arten von gefälltem Siliciumdioxyd und Metalloxyde, wie Titandioxyd, Ferrioxyd, Aluminiumoxyd und Zinkoxyd, soweit sie jeweils eine Oberfläche von mindestens 20 $m^2/g$ aufweisen. Pyrogen erzeugte Siliciumdioxyde mit einer Oberfläche von 50 bis 600 $m^2/g$, insbesondere 120 bis 150 $m^2/g$, sind bevorzugt. (Die hier in Beschreibung und Patentansprüchen angegebenen Werte für Oberflächengrößen von Füllstoffen sind BET-Werte, also Werte, die durch stickstoffadsorption gemäß ASTM Special Technical Publication, n° 51, 1941, Seite 95 ff., bestimmt werden.)

Verbindungen der allgemeinen Formel

$$HR^1C = CHX,$$

worin X die Gruppe —CN oder eine Gruppe der Formel —$COOR^2$, wobei $R^2$ ein Alkylrest mit 1 bis 4 Kohlenstoffatomen ist, und $R^1$ Wasserstoff oder die Methylgruppe bedeutet, sind Acrylnitril, Acrylsäureester, wie Methylacrylat, Äthylacrylat, n-Propylacrylat, Isopropylacrylat und die verschiedenen isomeren Butylacrylate, und Crotonsäureester, wie Crotonsäuremethylester, Crotonsäureäthylester, Crotonsäuren-propylester, Crotonsäureisopropylester und die verschiedenen isomeren Crotonsäurebutylester. Beispiele für mit derartigen Verbindungen mischpolymerisierbare andere Monomere sind Vinylacetat und Methacrylsäureester, wie Methylmethacrylat, Äthylmethacrylat, die verschiedenen isomeren Propylmethacrylate und die verschiedenen isomeren Butylmethacrylate. Vorzugsweise beträgt die Menge von anderem Monomer höchstens 50 Gewichtsprozent, bezogen auf das Gesamtgewicht der jeweils verwendeten Menge von Verbindung der allgemeinen Formel $HR^1C = CHX$ und anderem Monomer.

Vorzugsweise wird die Verbindung der allgemeinen Formel $HR^1C = CHX$ oder ein Gemisch aus mindestens einer derartigen Verbindung und mindestens einem damit mischpolymerisierbaren anderen Monomeren in solchen Mengen auf der Oberfläche dieses Füllstoffs polymerisiert, daß dieser Füllstoff nach der Polymerisation 0,2 bis 35 Gewichtsprozent Kohlenstoff, vorzugsweise jedoch höchstens 7 Gewichtsprozent Kohlenstoff, enthält.

Das Polymerisieren von Verbindung der allgemeinen Formel $HR^1C = CHX$ oder einem Gemisch aus mindestens einer derartigen Verbindung und mindestens einem damit mischpolymerisierbaren anderen Monomer auf der Oberfläche von anorganischen Füllstoff mit einer Oberfläche von mindestens 20 $m^2/g$ kann bei den für die Polymerisation bzw. Mischpolymerisation von Verbindung der allgemeinen Formel $HR^1C = CHX$ üblichen Temperaturen und Drücken erfolgen. Gemäß einer bevorzugten Arbeitsweise zur Herstellung von erfindungsgemäß verwendetem modifiziertem anorganischem Füllstoff wird die Verbindung der allgemeinen Formel $HR^1C = CHX$ bzw. das Gemisch aus derartiger Verbindung und mindestens einem damit mischpolymerisierbaren anderen Monomer in Gasform eingesetzt.

Die Polymerisation der Verbindung der allgemeinen Formel $HR^1C = CHX$ oder einem Gemisch aus einer derartigen Verbindung und mindestens einem damit mischpolymerisierbaren anderen Monomer auf der Oberfläche von anorganischen Füllstoff mit einer Oberfläche von mindestens 20 $m^2/g$ kann mit den gleichen Mitteln bzw. Maßnahmen ausgelöst werden, mit denen auch sonst die Polymerisation bzw. Mischpolymerisation von Verbindung der allgemeinen Formel $HR^1C = CHX$ radikalisch oder anionisch ausgelöst wird. Beispiele für solche Mittel bzw. Maßnahmen sind peroxydische Verbindungen, wie Benzoylperoxyd oder tert.-Butyl-2-äthylhexaoat, und Hochenergiestrahlen, wie Ultraviolett-Licht, sowie Ultraschall.

Falls erwünscht, kann das Polymerisieren der Verbindung der allgemeinen Formel $HR^1C = CHX$ oder einem Gemisch aus einer derartigen Verbindung und mindestens einem damit mischpolymerisierbaren anderen Monomer auf der Oberfläche von anorganischem Füllstoff mit einer Oberfläche von mindestens 20 $m^2/g$ unter mechanischer Beanspruchung des Gemisches aus anorganischem Füllstoff und zu polymerisierendem Monomer z.B. in einer Kugelmühle erfolgt sein. Es ist dies jedoch keineswegs erforderlich.

Vorzugsweise beträgt die Menge von anorganischem Füllstoff mit einer Oberfläche von mindestens 20 $m^2/g$, auf dessen Oberfläche Verbindung der allgemeinen Formel $HR^1C = CHX$ oder ein Gemisch aus derartiger Verbindung und mindestens einem damit mischbaren anderen Monomer polymerisiert wurde, 3 bis 35 Gewichtsprozent, insbesondere 4 bis 12 Gewichtsprozent, jeweils bezogen auf das Gesamtgewicht der jeweiligen Masse.

Zusätzlich zu den genannten Komponenten können bei der Bereitung der erfindungsgemäßen Massen Stoffe mitverwendet werden, die auch bisher bei der Herstellung von unter Ausschluß von Wasser lagerfähigen, bei Zutritt von Wasser bei Raumtemperatur zu Elastomeren vernetzenden Massen aus kondensationsfähige Endgruppen aufweisendem Diorganopolysiloxan und mindestens drei an Silicium gebundene, hydrolysierbare Gruppen aufweisender Siliciumverbindung als zusätzliche Stoffe mitverwendet werden konnten. Beispiele für solche zusätzlich mitverwendbaren Stoffe sind anorganische Füllstoffe mit einer Oberfläche von mindestens 20 $m^2/g$, die nicht oder anders modifiziert sind als die erfindungsgemäß verwendeten anorganischen Füllstoffe mit einer Oberfläche von mindestens 20 $m^2/g$, anorganische Füllstoffe mit einer Oberfläche von weniger als 20 $m^2/g$, Pigmente, lösliche Farbstoffe, Riechstoffe, Organopolysiloxanharze, einschließlich solcher aus $(CH_3)SiO_{1/2}$- und $SiO_{4/2}$-Einheiten,

rein-organische Harze, wie Polyvinylchloridpulver oder Pulver aus Homo- oder Mischpolymerisaten des Acrylnitrils, Korrosionsinhibitoren, Oxydationsinhibitoren, Hitzestabilisatoren, Lösungsmittel, weitere Mittel zur Verbesserung der Haftfestigkeit der aus den Massen hergestellten Elastomeren auf Unterlagen, auf denen die Elastomeren erzeugt wurden, wie gamma-Glycidyloxypropyltriäthoxysilan, Kondensationskatalysatoren, wie Zinnsalze oder Organozinnsalze von Carbonsäuren, z.B. Dibutylzinndilaurat, Weichmacher, wie bei Raumtemperatur flüssige, durch Trimethylsiloxygruppen endblockierte Dimethylpolysiloxane und/oder Phosphorsäureester, Lichtschutzmittel und zellenerzeugende Mittel, wie Azodicarbonamid.

Beispiele für Füllstoffe mit einer Oberfläche von weniger als 20 $m^2/g$ sind : Quarzmehl, Diatomeenerde, Neuburger Kreide, Calciumsilikat, Zirkoniumsilikat, Calciumcarbonat, z.B. in Form von gemahlener Kreide, calciniertes Aluminiumsilikat und pulverförmiges Natriumaluminiumsilikat mit Molekularsiebeigenschaften.

Auch faserige Füllstoffe, wie Asbeste und/oder Glasfasern, insbesondere solche mit einer durchschnittlichen Länge von höchstens 0,5 mm, und/oder organische Fasern können mitverwendet werden.

Zumindest Teilmengen aller oben genannten Füllstoffe mit einer Oberfläche von mindestens 20 $m^2/g$ oder weniger als 20 $m^2/g$, soweit sie anorganischer Natur sind und soweit es sich dabei nicht um die erfindungsgemäß verwendeten Füllstoffe handelt, können hydrophobiert sein, beispielsweise durch Behandlung mit Trimethyläthoxysilan oder Stearinsäure. Falls erwünscht, kann auch eine solche Behandlung z.B. in einer Kugelmühle durchgeführt worden sein.

Es können Gemische aus verschiedenen Füllstoffen mit einer Oberfläche von mindestens 20 $m^2/g$ und/oder Füllstoffen mit einer Oberfläche von weniger als 20 $m^2/g$ verwendet werden.

Zur Bereitung der erfindungsgemäßen Massen können alle Bestandteile der jeweiligen Masse in beliebiger Reihenfolge miteinander vermischt werden. Dieses Vermischen erfolgt vorzugsweise bei Raumtemperatur und unter Ausschluß von Wasser. Falls erwünscht, kann dieses Vermischen aber auch bei höheren Temperaturen erfolgen, z.B. bei einer Temperatur im Bereich von 35 bis 150 °C.

Für die Vernetzung der erfindungsgemäßen Massen reicht der normale Wassergehalt der Luft aus. Die Vernetzung kann, falls erwünscht, auch bei höheren Temperaturen als Raumtemperatur oder niedrigeren Temperaturen als Raumtemperatur, z.B. bei 0 bis 10 °C, und/oder mittels den normalen Wassergehalt der Luft übersteigenden Konzentrationen von Wasser durchgeführt werden.

Die erfindungsgemäßen Massen sind standfest. Deshalb laufen sie vor der Vernetzung zum Elastomeren aus senkrechten oder gegenüber der Waagerechten geneigten Fugen nicht aus oder von senkrechten oder gegenüber der Waagerechten geneigten Flächen nicht ab.

Die aus den erfindungsgemäßen Massen erzeugten Elastomeren haften ganz besonders gut auf lackiertem, lasiertem oder unlasiertem Holz, oxydiertem, insbesondere elektrolytisch oxydiertem Aluminium und unbehandeltem Aluminium sowie auf Glas, wenn sie auf diesen Unterlagen erzeugt wurden und auf diesen Unterlagen verbleiben, auch wenn die Unterlagen vor dem Aufbringen der Massen nicht grundiert wurden.

Die aus den erfindungsgemäßen Massen auf anderen Unterlagen als den vorstehend genannten Unterlagen, wie Email, Porzellan, Steingut oder anderem gebrannten Ton erzeugten Elastomeren haften auf diesen Unterlagen ebenfalls sehr gut.

Die erfindungsgemäßen Massen eignen sich allgemein als Klebstoffe, Verkittungsmassen, Beschichtungsmassen und zum Abdichten von Fugen, einschließlich senkrecht verlaufender Fugen, und ähnlichen Leerräumen mit lichten Weiten von z.B. 1 mm bis 50 mm, beispielsweise von Land-, Wasser- oder Luftfahrzeugen sowie von Gebäuden, einschließlich solcher aus Leichtbausteinen oder vorgefertigten Bauteilen.

In dem folgenden Beispiel beziehen sich alle Angaben von Teilen und Prozentsätzen auf das Gewicht, soweit nichts anderes angegeben ist.

Die in den folgenden Beispielen verwendeten anorganischen Füllstoffe mit einer Oberfläche von mindestens 20 $m^2/g$, auf deren Oberfläche Verbindung der allgemeinen Formel $HR^1C = CHX$ oder ein Gemisch aus derartiger Verbindung und damit mischpolymerisierbaren anderem Monomer polymerisiert wurde, wurden hergestellt wir folgt :

a) Zu einem Gemisch aus 55 g pyrogen in der Gasphase erzeugtem Siliciumdioxyd mit einer Oberfläche von 150 $m^2/g$ und 3 g eines Gemisches aus gleichen Gewichtsteilen Benzoylperoxyd und pyrogen erzeugtem Siliciumdioxyd mit einer Oberfläche von 200 $m^2/g$ werden unter Rühren 10 g gasförmiges Acrylnitril gegeben. Danach wird 4 Stunden auf 85 °C erwärmt. Nach dem Abdestillieren von nicht umgesetztem Acrylnitril bei 16 mbar (abs.) und Aufbewahren des Rückstandes über Nacht im Trockenschrank bei 80 °C hat das so modifizierte Siliciumdioxyd eine Oberfläche von 123 $m^2/g$ und einen Kohlenstoffgehalt von 5,06 %.

b) Die vorstehend unter a) beschriebene Arbeitsweise wird wiederholt mit der Abänderung, daß anstelle der 10 g Acrylnitril 10 g eines gasförmigen Gemisches aus 8 g Acrylnitril und 2 g Methacrylsäuremethylester verwendet werden. Das so erhaltene modifizierte Siliciumdioxyd hat eine Oberfläche von 127 $m^2/g$ und einen Kohlenstoffgehalt von 4,63 %.

c) Zu 55 g pyrogen in der Gasphase erzeugtem Siliciumdioxyd mit einer Oberfläche von 150 $m^2/g$ werden unter Rühren bei 80 °C 8 g gasförmiges Acrylnitril gegeben. Das so erhaltene Gemisch wird unter Rühren 3 Stunden mit Ultraviolett-Licht aus einer 300 Watt-Lampe (« Osram Ultra Vita Lux ») bestrahlt.

Nach dem Abdestillieren von nicht umgesetztem Acrylnitril bei 16 mbar (abs.) und Aufbewahren des Rückstandes über Nacht im Trockenschrank bei 80 °C hat das so modifizierte Siliciumdioxyd eine Oberfläche von 147 $m^2/g$ und einen Kohlenstoffgehalt von 0,72 %.

d) Zu einem Gemisch aus 55 g pyrogen in der Gasphase erzeugtem Siliciumdioxyd mit einer Oberfläche von 150 $m^2/g$ und 2,5 g einer pulverförmigen Mischung aus 6 Teilen tert.-Butyl-per-2-äthylhexaoat und 40 Teilen inertem Träger (« VP 109 » der Peroxid Chemie) werden unter Rühren 10 g gasförmiges Äthylacrylat gegeben. Danach wird 6 Stunden auf 125 °C erwärmt. Nach dem Abdestillieren von nicht umgesetztem Acrylsäureester bei 16 mbar (abs.) und Aufbewahren des Rückstandes über Nacht im Vakuumtrockenschrank bei 90 °C hat das so modifizierte Siliciumdioxyd eine Oberfläche von 129 $m^2/g$ und einen Kohlenstoffgehalt von 4,54 %.

e) Die vorstehend unter d) beschriebene Arbeitsweise wird wiederholt mit der Abänderung, daß anstelle von 10 g Äthylacrylat 10 g gasförmiger Crotonsäureäthylester verwendet werden.

Das so erhaltene modifizierte Siliciumdioxyd hat eine Oberfläche von 116 $m^2/g$ und einen Kohlenstoffgehalt von 5,63 %.

## Beispiel

Bei Raumtemperatur und 10 mbar (abs.) werden in einem Platnetenmischer 67,5 Teile in den endständigen Einheiten je eine Si-gebundene Hydroxylgruppe aufweisendes Dimethylpolysiloxan mit einer Viskosität bei 25 °C von 50 000 mPa.s mit 20 Teilen eines durch Trimethylsiloxygruppen endblockierten Dimethylpolysiloxans mit einer Viskosität bei 25 °C von 100 mPa.s, 4,5 Teilen Methyltriacetoxysilan und 8,5 Teilen modifiziertem Füllstoff der in der folgenden Tabelle angegebenen Art vermischt.

Alle so erhaltenen Massen sind transparent, standfest, unter Ausschluß von Wasser lagerfähig und härten unter der Einwirkung des Wasserdampfs der Luft zu einem Elastomeren.

## Vergleichsversuch 1

Die in Beispiel 1 beschriebene Arbeitsweise wird wiederholt mit der Abänderung, daß anstelle der 8,5 Teile von modifiziertem Füllstoff 8,5 Teile unmodifiziertes, pyrogen in der Gasphase erzeugtes Siliciumdioxyd mit einer Oberfläche von 150 $m^2/g$ eingesetzt werden.

## Vergleichsversuch 2

Die im Beispiel beschriebene Arbeitsweise wird wiederholt mit der Abänderung, daß anstelle der 8,5 Teile von modifiziertem Füllstoff 8,5 Teile eines Gemisches aus 95 % unmodifiziertem, pyrogen in der Gasphase erzeugtem Siliciumdioxyd mit einer Oberfläche von 150 $m^2/g$ und 6 % Polyacrylnitrilpulver, dessen Teilchen zu 99,5 % ihrer Menge kleiner als 90 Mikrometer sind, verwendet werden.

Mit Proben der gemäß dem Beispiel und den Vergleichsversuchen hergestellten Massen werden 5 mm dicke Schichten zwischen Platten mit den Abmessungen 10 mm . 50 mm aus den in der folgenden Tabelle angegebenen Stoffen und jeweils einer Platte aus dem gleichen Stoff erzeugt. Nach einer Woche Lagerung an der Luft bei Raumtemperatur werden die Platten mit einer Geschwindigkeit von 12 mm je Minute getrennt. Es werden folgende Ergebnisse erhalten, wobei bedeuten :

A = Adhäsionriß = Trennung zwischen Beschichtung und Platte,

K = Kohäsionsriß = Riß in der Beschichtung,

AK = Adhäsions- und Kohäsionsriß.

Außerdem werden bei Messung der Zugfestigkeit der Elastomeren die in der folgenden Tabelle ..gebenen Werte erhalten :

Tabelle

| Platten | Rißart bei Elastomer aus Masse dem Beispiel mit Füllstoff | | | | | hergestellt gemäß Vergleichsversuch | |
|---|---|---|---|---|---|---|---|
| | a) | b) | c) | d) | e) | 1 | 2 |
| Glas | **) | **) | **) | K | K | **) | **) |
| Weißblech | K | K | AK | AK | AK | A | A |
| Aluminium | **) | **) | **) | K | K | **) | **) |
| Fichte *) | K | K | K | K | K | AK | AK |

Tabelle (Fortsetzung)

| Platten | Rißart bei Elastomer aus Masse hergestellt gemäß dem Beispiel mit Füllstoff | | | | | Vergleichsversuch | |
|---|---|---|---|---|---|---|---|
| | a) | b) | c) | d) | e) | 1 | 2 |
| Mahagoni *) | K | K | K | K | K | AK | AK |
| Oregon-Douglasie | K | K | K | K | K | AK | AK |

| | Zugfestigkeit ($N/mm^2$) von Elastomer aus Masse hergestellt gemäß dem Beispiel mit Füllstoff | | | | | Vergleichsversuch | |
|---|---|---|---|---|---|---|---|
| | a) | b) | c) | d) | e) | 1 | 2 |
| | 1,35 | 1,31 | 1,19 | 1,29 | 1,26 | 1,08 | 1,1 |

*) mit handelsüblichem (Registriertes Warenzeichen « Xyladecor ») Holzschutzmittel, das gleichzeitig als farblose Lasur dient, überzogen

**) nicht bestimmt

**Ansprüche**

1. Unter Ausschluß von Wasser lagerfähige, bei Zutritt von Wasser bei Raumtemperatur zu Elastomeren vernetzende Massen aus

kondensationsfähige Endgruppen aufweisendem Diorganopolysiloxan,

mindestens drei an Silicium gebundene, hydrolysierbare Gruppen aufweisender Siliciumverbindung

modifiziertem anorganischem Füllstoff mit einer Oberfläche von mindestens 20 $m^2/g$ und gegebenenfalls üblichen Zusätzen, dadurch gekennzeichnet, daß mindestens ein Teil dieses Füllstoffs ein solcher ist auf dessen Oberfläche mindestens eine Acryl- bzw. Crotonsäure-Verbindung der allgemeinen Formel

$$HR^1C = CHX,$$

worin X die Gruppe —CN oder eine Gruppe der Formel —$COOR^2$, wobei $R^2$ ein Alkylrest mit 1 bis 4 Kohlenstoffatomen ist, und $R^1$ Wasserstoff oder die Methylgruppe bedeutet, oder ein Gemisch aus mindestens einer derartigen Verbindung und mindestens einem damit mischpolymerisierbaren anderen Monomer polymerisiert wurde.

2. Massen nach Anspruch 1, dadurch gekennzeichnet, daß der Kohlenstoffgehalt des auf der Oberfläche des Füllstoffs erzeugten Polymerisats 0,2 bis 7 Gewichtsprozent, bezogen auf das Gewicht dieses Füllstoffs, beträgt.

3. Massen nach Anspruch 1 oder 2, dadurch gekennzeichnet, daß sie den Füllstoff, auf dessen Oberfläche Polymerisat erzeugt wurde, in Mengen von 3 bis 35 vorzugsweise 4-12 Gewichtsprozent, bezogen auf das Gesamtgewicht der jeweiligen Masse, enthalten.

**Claims**

1. Compositions that can be stored in the absence of water, cross-link at room temperature in the presence of water to form elastomers, and comprise

a diorganopolysiloxane having condensable terminal groups,

a silicon compound having at least three silicon-bonded hydrolysable groups,

a modified inorganic filler having a surface area of at least 20 $m^2/g$, and, optionally, customary additives, characterised in that at least one acrylic acid or crotonic acid compound of the general formula

$$HR^1C = CHX$$

in which X represents the group —CN or a group of the formula —$COOR^2$, $R^2$ being an alkyl radical having from 1 to 4 carbon atoms, and $R^1$ représents hydrogen or the methyl group, or a mixture of at least

one compound of that type and at least one other monomer that is copolymerisable therewith, has been polymerised on the surface of at least a portion of the filler.

2. Compositions according to claim 1, characterised in that the carbon content of the polymer produced on the surface of the filler is from 0.2 to 7 % by weight, calculated on the weight of the filler.

3. Compositions according to claim 1 or 2, characterised in that they contain the filler, on the surface of which polymer has been produced, in quantities of from 3 to 35 % by weight, preferably from 4 to 12 % by weight, calculated on the total weight of the particular compositions.

**Revendications**

1. Matières pouvant se conserver à l'abri de l'eau, se réticulant en présence d'eau à la température ambiante en donnant des élastomères, formées à partir de

un polydiorganosiloxane présentant des groupes terminaux capables d'une condensation,

un composé du silicium présentant au moins trois groupes hydrolysables fixés sur du silicium,

une charge minérale modifiée présentant une surface spécifique de contact d'au moins 20 $m^2/g$ et éventuellement d'autres additifs, ces matières étant caractérisées en ce qu'au moins une partie de cette charge est telle qu'il y a eu polymérisation à sa surface d'au moins un composé de l'acide acrylique ou de l'acide crotonique répondant à la formule générale

$$HR^1C = CHX,$$

dans laquelle X représente le groupe —CN ou un groupe de formule —$COOR^2$, où $R^2$ est un radical alkyle ayant 1 à 4 atomes de carbone ; et $R^1$ est un atome d'hydrogène ou le groupe méthyle ou d'un mélange d'au moins un tel composé et d'au moins un autre monomère pouvant copolymériser avec lui.

2. Matières selon la revendication 1, caractérisées en ce que la teneur en carbone du polymère produit à la surface de la charge représente 0,2 à 7 % du poids de cette charge.

3. Matières selon l'une des revendications 1 et 2, caractérisées en ce qu'elles contiennent en des proportions de 3 à 35 %, de préférence 4 à 12 % en poids, par rapport au poids total des matières en cause, la charge à la surface de laquelle du polymère a été produit.